# EUROPÄISCHE PATENTANMELDUNG

(11) **EP 4 592 063 A1**
(43) Veröffentlichungstag der Anmeldung: **30.07.2025**
(21) Anmeldenummer: 25150716.6
(22) Anmeldetag: 08.01.2025
(51) Int. Cl.: B29C 65/08

(54) **MASCHINE ZUM ULTRASCHALLSCHWEISSEN SOWIE VERFAHREN ZUM ULTRASCHALLSCHWEISSEN**

(30) Priorität: 26.01.2024 DE 102024200700
(71) Anmelder: Magna Exteriors (Bohemia) s.r.o., 460 06 Liberec (CZ)
(72) Erfinder: ZDÁRSKÝ, Radim, 463 12 Liberec 25 (CZ)
(74) Vertreter: Reuter, Silke Beatrix

(57) **Zusammenfassung**

Maschine (1) zum Ultraschallschweißen mit mindestens einer geführten Schweißhorn (4), wobei das Sonotrodenwerkzeug (30) an einer Halterung (13) im Nullpunkt des Sontrodenwerkzeugs (30) gehalten ist und entlang einer herzu-stellenden Schweißnaht geführt ist, dadurch gekennzeichnet, dass die Halterung (13) auch eine Anlage für eine Sprühdüse (10) bildet, die in einem spitzen Win-kel zum Sonotrodenwerkzeug (30) montiert ist.

## Beschreibung

Die Erfindung betrifft eine Maschine zum Ultraschallschweißen mit mindestens einem geführten Schweißhorn, wobei das Sonotrodenwerkzeug an einer Halterung des Sontrodenwerkzeugs gehalten ist und entlang einer herzustellenden Schweißnaht geführt ist.

Die Erfindung betrifft auch ein Verfahren zum Ultraschallschweißen.

### Stand der Technik

Das Ultraschallschweißen ist ein Verfahren zum Fügen von Kunststoffen, bei dem mechanische Schwingungen oberhalb der Hörgrenze Verwendung finden. Eine Darstellung des Standes der Technik findet sich unter der Webseite https://www.rapiddirect.com/de/blog/ultrasonic-welding/ und in einem Wikipedia-Eintrag: https:/Ide.wikipedia.org/wiki/Schwei%C3%9F en#Ultraschall-schwei%C3%9Fen.

Der Frequenzbereich von Ultraschallschwingungen liegt in etwa zwischen 20 kHz und einem GHz. Mechanische Schwingungen im Ultraschallfrequenzbereich werden häufig mit Hilfe von piezoelektrischen Konvertern aus elektrischer Energie erzeugt.

Die resultierende mechanische Schwingungsenergie wird über eine mit dem Konverter, gegebenenfalls über ein Amplitudentransformationsstück, einen Booster, verbundene Sonotrode auf das zu bearbeitende Material aufgebracht. Die Sonotrode steht dabei in direktem Kontakt mit dem zu bearbeitenden Material und leitet die erzeugten mechanischen Schwingungen unter Druck an dieses weiter.

Die Aufgabe des Amplitudentransformationsstücks besteht darin, die vom Konverter bereitgestellte Schwingungsamplitude den Erfordernissen des zu bearbeitenden Materials anzupassen und diese Schwingungen an die Sonotrode weiterzuleiten. Die Fläche der Sonotrode, die dafür vorgesehen ist, mit dem zu bearbeitenden Material in Kontakt zu treten, wird auch als Siegelfläche bezeichnet.

Eine Sonotrode ist somit Bestandteil eines im Betrieb schwingenden Gebildes, dass aus einem Konverter, gegebenenfalls einem Amplitudentransformationsstück und eben der Sonotrode besteht. Dieses schwingende Gebilde wird auch als Ultraschallschwingeinheit bezeichnet.

Um eine effektive Übertragung der Ultraschallschwingungen mittels einer Ultraschallschwingeinheit auf ein zu bearbeitendes Material sicherstellen zu können, ist es notwendig, dass die Ultraschallschwingeinheit in Resonanz gebracht wird. Die Ultraschallschwingeinheit weist abhängig von ihrem Aufbau im Allgemeinen eine Vielzahl unterschiedlicher Eigenfrequenzen auf. Eine resonante Schwingung der Ultraschallschwingeinheit kann nur hervorgerufen werden, wenn der Konverter eine Eigenfrequenz der Ultraschallschwingeinheit erzeugt. Aus diesem Grunde müssen Konverter und Ultraschallschwingeinheit aufeinander abgestimmt sein.

Bei der Ultraschallschweißung wird das zu bearbeitende Material im Allgemeinen zwischen der Sonotrode und einem entsprechenden nicht zur Ultraschallschwingeinheit gehörenden Gegenwerkzeug, dem Amboss, eingebracht. Die Ultraschallenergie wird über die Siegelfläche von der Sonotrode auf das zu bearbeitenden Material übertragen. Hierbei kommt es zu einer Umwandlung von Ultraschallschwingungen in Reibungsenergie, wodurch Wärme erzeugt wird, die zum Plastifizieren des bearbeiteten Materials führt. Ursache für diese thermische Plastifizierung sind Grenzflächen- und Molekularreibungen.

Besonders kritisch ist die Herstellung einer solchen Schweißverbindung, wenn einen Class-A-Oberfläche für den Automobilbau vorhanden ist. Die Schweißnaht darf auf der Class-A Oberfläche nicht sichtbar werden.

Der Ausdruck "Class A" bezeichnet sichtbare Freiform-Flächen im Exterieur- und Interieur-Bereich der Fahrzeuge. Unter "Class B"- Flächen werden für den Benutzer nicht sichtbaren Innenflächen von Class A-Flächen sowie die tragende Struktur eines Objektes verstanden.

Es ist Aufgabe der Erfindung eine wasserdichte Verbindung zwischen Kunststoffbauteilen zu erreichen, wobei die Class A- Oberfläche unbeeinflusst bleibt.

### Beschreibung der Erfindung

Die Aufgabe wird gelöst mit einer Maschine zum Ultraschallschweißen mit mindestens einem geführten Schweißhorn eines Sonotrodenwerkzeugs, wobei das Sonotrodenwerkzeug an einer Halterung des Sontrodenwerkzeugs gehalten ist und entlang einer herzustellenden Schweißnaht geführt wird, wobei die Halterung auch eine Anlage oder Halterung für eine Sprühdüse bildet, die in einem spitzen Winkel zum Sonotrodenwerkzeug montiert ist und ein Fluid aufbringt.

Das Schweißhorn und die Sprühdüse werden gemeinsam über die zu verschweißenden Bauteile geführt. Mit dem Begriff Sprühdüse ist auch ein Flüssigkeitsapplikator umfasst sowie ein Druckluftauslass.

Gegebenenfalls folgt ein Roll/Schiebewerkzeug dem Schweißhorn im Schweißprozess.

Das Schweißhorn weist vorzugsweise eine einfache ballige Spitze auf.

Die Sprühdüse ist mit einem Vorratsbehälter für ein Fluid verbunden.

Die Aufgabe wird auch gelöst mit einem Verfahren zum Verschweißen von Kunststoffbauteilen mit einer Maschine, wobei die Sprühdüse einen Sprühnebel bildet, der die Oberfläche der Kunststoffbauteile im Bereich der einzubringenden Schweißnaht benässt.

Der Sprühnebel wird aus einer seifigen, wässrigen Lösung gebildet.

Die Menge des Sprühnebels wird so eingestellt, dass die Flüssigkeit im Schweißverfahren vollständig verdampft.

Das kontinuierliche Schweiß-Verfahren ermöglicht das Schweißen von Teilen beliebiger Größe mit hoher Formfreiheit unter Verwendung eines einfachen und kostengünstigen Schweißwerkzeugs, einer Sonotrode. Es ersetzt die Notwendigkeit einer großen und teuren Ultraschallsonde oder einer alternativen teuren und komplizierten Schweißmethode, wie z.B. dem Laserschweißen. Es erzeugt nicht nur eine starke Schweißnaht, sondern auch eine wasserdichte Schweißnaht, so dass es als Ersatz für das Kleben bei vielen Anwendungen verwendet werden kann, und es ersetzt auch das Punktschweißen, bei dem die Wasserdichtigkeit nur mit einer zusätzlichen Abdichtung erreicht werden kann.

### Beschreibung der Figuren

Figur 1 zeigt schematisch eine Maschine zum Ultraschallschweißen im Stand der Technik,
Figur 2 zeigt den Aufbau einer erfindungsgemäßen Maschine,

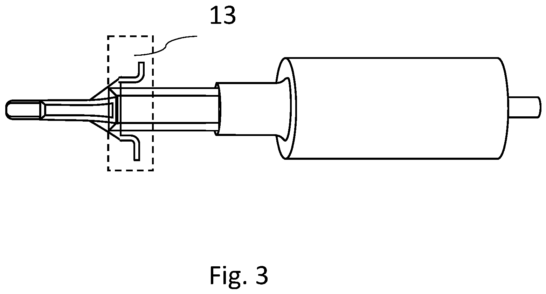

Figur 3 zeigt ein Sonotrodenwerkzeug.

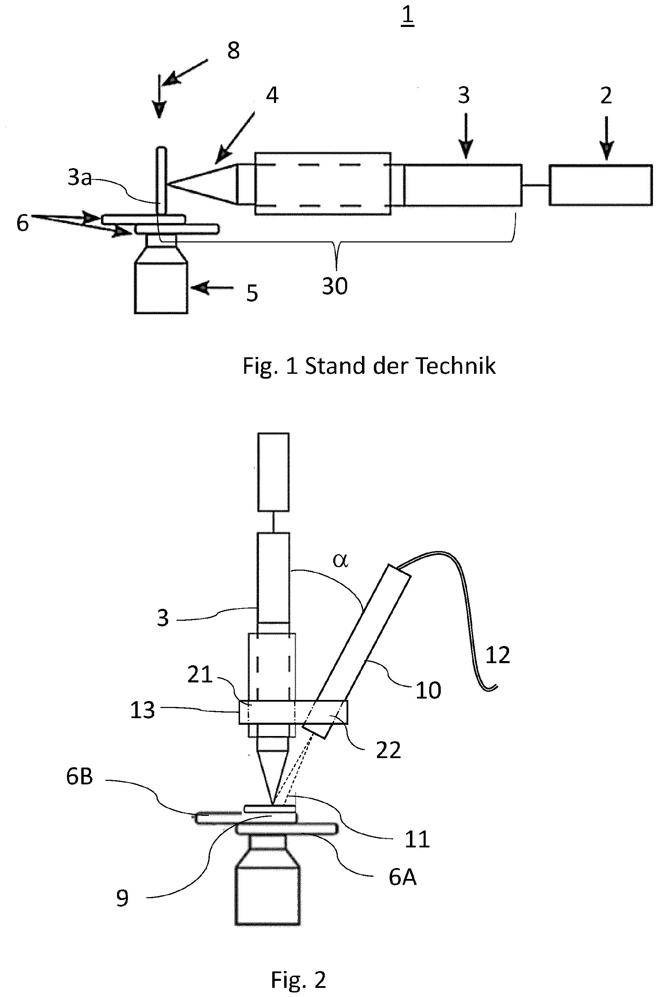

In Figur 1 ist ein Beispiel aus dem Stand der Technik gezeigt. Eine Maschinenpresse oder ein Roboterarm hält das eigentliche Schweißsystem und übt die Kraft aus, die die Schweißverbindung zusammenhält, was schematisch als Pfeil 8 dargestellt ist. Es verfügt über ein Manometer und einen Regler, sodass der Bediener die auf das System ausgeübte Kraft einstellen kann.

Der Schweißstapel besteht in diesem Beispiel aus dem Wandler 2, dem Verstärker 3 und dem Schweißhorn 4, die alle an der Maschinenpresse über einen zentralen Punkt des Verstärkers 3 montiert sind.

Ein Wandler 2 oder Konverter wandelt hochfrequente elektrische Energie in mechanische Schwingungen um.

Der Booster oder Verstärker 3 hat zwei Funktionen. Erstens verstärkt er die erzeugten Schwingungen durch Zusammenziehen und Ausdehnen und überträgt sie auf das Schweißhorn 4.

Das Schweißhorn 4 ist für die Übertragung der Vibration auf das geschweißte Teil verantwortlich. Es besteht aus einem widerstandfähigen Metall wie beispielsweise Titan. Um den Verschleiß zu reduzieren, haben die meisten Schweißhörner 4 gehärtete Spitzen. Unter den zu verschweißenden Bauteilen 6 ist in der Regel ein Amboss 5 oder eine andere Auflage angeordnet.

Unter dem Sonotrodenwerkzeug 30 versteht man den Booster 3 mit dem Schweißhorn 4 zusammen.

Die beiden Werkstücke 6 werden im Bereich des Schweißhorns verschweißt.

Der Pfeil 8 stellt die Anpresskraft dar.

Die erfindungsgemäße Anordnung, siehe Figur 2, dient zu einem 100%iger kontinuierlicher Ultraschallbetrieb während des Schweißens, um eine wasserdichte Schweißnaht zu erzeugen.

Der prinzipielle Aufbau der erfindungsgemäßen Maschine folgt der in Figur 1 dargestellten Maschine mit ihren Teilen und der prinzipiellen Anordnung.

Die zu verschweißenden Bauteile werden gegeneinandergepresst und vor dem Verschweißen gesichert. Der Schweißdruck kommt vom Roboterarm, der die Sonotrode führt.

Die Verwendung der einzelnen Komponenten wie ein Verstärker sind optional, bzw. die Funktionen sind im eigentlichen Sonotrodenwerkzeug 30 integriert.

Zur Befestigung der Sonotrode 4 an einem Arbeitstisch oder einem Roboterarm wird das Sonotrodenwerkzeug 30 in einer vorteilhaften Ausführungsform im Bereich seiner Nullpunkt-Lage mit einer Halterung 13 fest eingespannt, so dass hierdurch das Sonotrodenwerkzeug 30 lagefixiert, aber schwingfähig an dem Roboterarm positioniert wird.

Die Ultraschall-Schweißsonotrode wird also im Nullpunkt gehalten, so dass höhere Radialkräfte auf sie einwirken können.

Alternativ dazu kann das Sonotrodenwerkzeug auch zentralen Bereich des Verstärker oder des Wandlers gehalten sein.

Das Sonotrodenwerkzeug 30 wird mit Hilfe eines Roboters oder Manipulators kontinuierlich über ein Bauteil 6B gefahren und es wird die Schweißnaht mit dem Bauteil 6A im Kontaktbereich zwischen der Oberfläche des Bauteil 6B und dem Schweißhorn 4 mit der Maschine zum Ultraschallschweißen erzeugt. Da die Schweißnaht nur im Kontakt zwischen Schweißhorn 4, genauer der Spitze des Schweißhorns, und dem Bauteil 6 entsteht, ist eine sehr effektive Kühlung erforderlich.

Für die Kühlung wird in einer bevorzugten Ausführungsform Wasser verwendet, das das Bauteil 6 und das Schweißhorn 4 stärker abkühlt als die Umgebungsluft oder ein Luft-Gebläse.

Zusätzlich zu der Kühlung mit reinem Wasser wird eine seifige Lösung verwendet. Das seifige Fluid wird über einen Sprühdüse 10 in einem Spraynebel 11 auf die Oberfläche des Bauteils 6B und das Schweißhorn 4 aufgebracht.

Zur Versorgung dient eine Zuleitung 12, die mit einem Vorratsbehälter verbunden ist.

Die Sprühdüse wird ebenfalls an der Halterung 13 befestigt und verläuft in einem spitzen Winkel zum Sonotrodenwerkzeug 30.

Mit dem kühlenden und leicht schmierenden Flüssigkeitsnebel ist ein kontinuierliches Ultraschallschweißen unter Verwendung einer einfachen Schweißsonotrode möglich, das eine starke, wasserdichte Schweißnaht ohne Beschädigungen erzeugt und keine Abdrücke auf den Bauteilen 6B, 6A hinterlässt.

Die Kühlung über eine Flüssigkeit kann auch mit einem mechanischen Aufbringen, beispielsweise mit einem Schwamm oder einem Tampon, erfolgen.

Die Kühlung erfolgt somit mit einem Fluid, wobei der Begriff des Fluid in der Anmeldung sowohl eine Flüssigkeit als auch Luft umfasst.

Für härtere Kunststoffe, die höhere Schmelztemperaturen haben oder um höhere Schweißgeschwindigkeiten zu erreichen, wird direkt nach dem Schweißhorn 4 ein Roll-/Schiebewerkzeug in der Maschine angeordnet.

Das Roll/Schiebewerkzeug hält die Teile nach dem Schweißen für eine bestimmte Zeit zusammen. Während dieser kurzen Zeit und unter dem Einfluss der Kühlung wird das Material nach dem Schweißen wieder fest und ist lokal fertig verschweißt.

Auf das zu verschweißende Bauteil 6B und das Schweißhorn 4 wird nur so viel Wasser und Zusatzstoffe aufgetragen, wie während des Schweißens verdampft werden können, so dass die Teile nach dem Schweißen trocken und sauber sind.

Die Technologie kann auf alle Plattenmaterialien, Formen und Größen angewandt werden und erzeugt eine qualitativ hochwertige, wasserdichte Schweißnaht ohne Beschädigungen oder Ablesen von Schweißresten auf allen Plattenoberflächen.

## Patentansprüche

1. Maschine (1) zum Ultraschallschweißen mit mindestens einem geführten Schweißhorn (4), wobei das Sonotrodenwerkzeug (30) an einer Halterung (13) des Sontrodenwerkzeugs (30) gehalten ist und entlang einer herzustellenden Schweißnaht geführt ist, **dadurch gekennzeichnet, dass** die Halterung (13) auch eine Anlage für eine Sprühdüse (10) bildet, die in einem spitzen Winkel zum Sonotrodenwerkzeug (30) montiert ist und ein Fluid appliziert.

2. Maschine nach Anspruch 1, **dadurch gekennzeichnet, dass** das Schweißhorn (4) und die Sprühdüse (10) gemeinsam über die zu verschweißenden Bauteile (6, 6A, 6B) geführt werden.

3. Maschine nach Anspruch 1 oder 2, **dadurch gekennzeichnet, dass** ein Roll/Schiebewerkzeug dem Schweißhorn (4) folgt.

4. Maschine nach einem der vorhergehenden Ansprüche, **dadurch gekennzeichnet, dass** das Schweißhorn (4) eine einfache ballige Spitze aufweist.

5. Maschine nach einem der vorhergehenden Ansprüche, **dadurch gekennzeichnet, dass** die Sprühdüse (10) mit einem Vorratsbehälter für ein Fluid verbunden ist.

6. Maschine nach einem der vorhergehenden Ansprüche, **dadurch gekennzeichnet, dass** das Fluid eine wässrige Lösung oder Luft ist.

7. Verfahren zum Verschweißen von Kunststoffbauteilen mit einer Maschine (1) nach einem der Ansprüche 1 bis 6, wobei die Sprühdüse (10) einen Sprühnebel bildet, der die Oberfläche der Kunststoffbauteile (6, 6A, 6B) im Bereich der einzubringenden Schweißnaht benetzt.

8. Verfahren nach Anspruch 7, wobei der Sprühnebel aus einer seifigen, wässrigen Lösung gebildet wird.

9. Verfahren nach Anspruch 7 oder 8, wobei der die Menge des Sprühnebels so eingestellt wird, dass die Flüssigkeit im Schweißverfahren vollständig verdampft.

10. Verfahren nach einem der Ansprüche 1 bis 6, wobei die Sprühdüse (10) eine Zufuhr von Luft ermöglicht, die die Oberfläche der Kunststoffbauteile (6, 6A, 6B) im Bereich der einzubringenden Schweißnaht kühlt.
